# EUROPÄISCHE PATENTSCHRIFT

(11) **EP 0 678 423 B1**
(45) Veröffentlichungstag und Bekanntmachung des Hinweises auf die Patenterteilung: **03.09.1997**
(21) Anmeldenummer: 95102575.8
(22) Anmeldetag: 23.02.1995
(51) Int. Cl.: B60R 13/02, B60J 5/04

(54) **Elastische Abdichtfolie**
Elastic sealing film
Feuille d'étanchéité élastique

(30) Priorität: 23.04.1994 DE 4414302
(43) Veröffentlichungstag der Anmeldung: 25.10.1995
(73) Patentinhaber: Dr.Ing.h.c. F. Porsche Aktiengesellschaft, 70435 Stuttgart (DE)
(72) Erfinder: Kuebler, Markus, D-75378 Bad Liebenzell (DE); Hofmann, Peter, D-75242 Neuhausen (DE)

(56) Entgegenhaltungen:
- DE-A- 2 941 209
- DE-A- 3 502 056
- US-A- 4 469 732
- US-A- 4 873 132

## Beschreibung

Die Erfindung betrifft eine elastische Abdichtfolie für ein Türinnenblech einer Kraftfahrzeugtür mit einer einstückig mit der Abdichtfolie ausgebildeten, von einer Fertigungslage in eine Einbaulage überführbaren Aufnahme, die in ihrer Einbaulage durch eine Öffnung des Türinnenblechs hindurchragt und ein in die Aufnahme eingesetztes Audio- oder Ausstattungsteil zumindest abschnittsweise umhüllt und gegenüber dem inneren Hohlraum des Türkörpers wasserdicht abschottet.

Bei einer bekannten elastischen Abdichtfolie der eingangs genannten Gattung (US-PS 4 873 132) ist an der Abdichtfolie eine einstückige Aufnahme für ein Audio- oder Ausstattungsteil vorgesehen, die von einer Fertigungslage in eine Einbaulage verlagerbar ist.

Die Aufnahme umfaßt in der Fertigungslage eine kreisförmige Bodenwand, die über mehrere konzentrisch zur Bodenwand verlaufende Wellenabschnitte mit der Abdichtfolie verbunden ist. In der Fertigungslage verläuft die Bodenwand der Aufnahme in der Ebene der Abdichtfolie, wogegen die Wellenabschnitte geringfügig vorstehen.

Durch manuelle Krafteinwirkung auf die kreisförmige Bodenwand in Richtung Fahrzeugaußenseite wird die Aufnahme in ihre etwa kegelstumpfförmige Einbaulage bewegt, in der sie einen Einbaulautsprecher abschnittsweise umhüllt und zum Innern des Türkörpers hin wasserdicht abschottet.

Die Aufnahme weist im Bereich der Öffnung des Türinnenblechs ihren größten Querschnitt auf, wobei sich der Querschnitt in Richtung Bodenwand bzw. zum Hohlraum des Türkörpers hin kontinuierlich verkleinert.

Dieser Anordnung haftet der Nachteil an, daß die Herstellung der Aufnahme mit den konzentrischen Wellenabschnitten aufwendig ist und daß die Aufnahme ein relativ kleines Volumen aufweist, da sie nur den unmittelbar hinter der Öffnung liegenden Bereich des Hohlraumes des Türkörpers nutzt.

Aufgabe der Erfindung ist es, an einer einstückig mit einer elastischen Abdichtfolie ausgebildeten Aufnahme für ein Audio- oder Ausstattungsteil solche Vorkehrungen zu treffen, daß sie einerseits einfach und kostengünstig herstellbar ist und daß andererseits der innerhalb des Hohlraums des Türkörpers vorhandene Raum zur Volumenvergrößerung der Aufnahme genutzt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß sich die in der Fertigungslage aus zwei übereinanderliegend angeordneten, im Querschnitt etwa U-förmig profilierten, sich in entgegengesetzten Richtungen erstreckenden Ausformungen gebildete Aufnahme einfach und kostengünstig herstellen läßt, da sich die Ausformungen in Ausformrichtung des Werkzeuges erstrecken. Durch manuelles Umstülpen der unteren, mit ihrer offenen Seite der Fahrzeugaußenseite zugekehrten Ausformung und nach unten Drücken dieses umgestülpten Bereiches wird die Aufnahme in ihre Einbaulage überführt, in der eine bedeutende Volumensvergrößerung erzielt wird, da die Aufnahme die Öffnung des Türinnenblechs nach unten hin überragt und den zwischen Sichtscheibe und Türinnenblech gebildeten Baumraum optimal nutzt.

Ein Ausführungsbeispiel der Erfindung ist in der Zeichnung dargestellt und wird im folgenden näher erläutert.

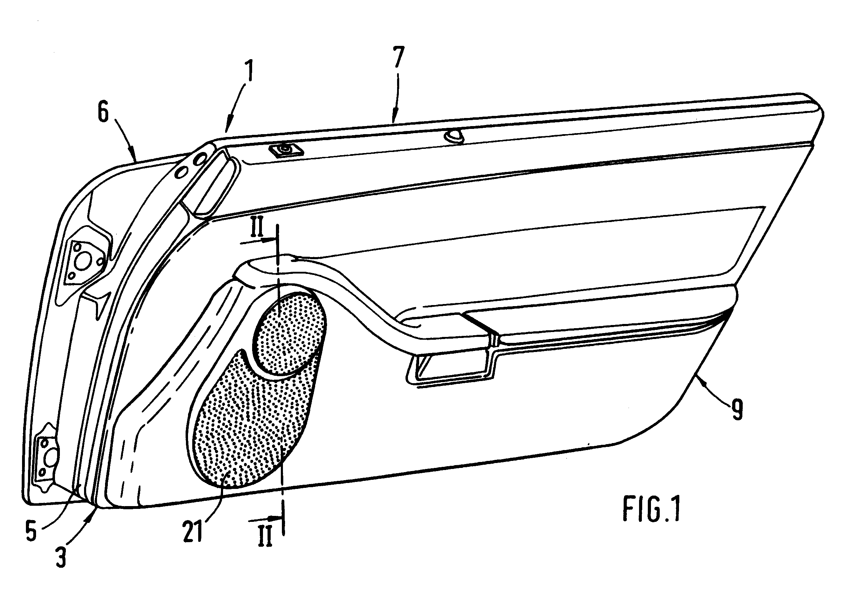

Es zeigt
- Fig. 1: eine perspektivische Ansicht auf die Innenseite einer Kraftfahrzeugtür,
- Fig. 2: einen Schnitt nach der LInie II-II der Fig. 1 in größerem Maßstab.

Eine Kraftfahrzeugtür 1 umfaßt einen einen Hohlraum 2 bildenden Türkörper 3, in dem eine in Höhenrichtung verstellbare Sichtscheibe 4 in ihrer abgesenkten Stellung C aufgenommen ist.

Der Türkörper 3 setzt sich aus einem Türinnenblech 5 und einem Türaußenblech 6 zusammen, die örtlich an randseitigen Bereichen miteinander verbunden sind.

Im Ausführungsbeispiel ist die Kraftfahrzeugtür 1 oberhalb einer Gürtellinie 7 rahmenlos ausgebildet.

Der Türkörper 3 ist auf der dem Fahrgastraum 8 zugekehrten Seite mit einer Verkleidung 9 versehen, die am Türinnenblech 5 in nicht näher dargestellter Weise durch Schrauben, Klipsen oder dgl. lösbar befestigt ist.

Das Türinnenblech 5 weist für Montagezwecke oder dgl. Öffnungen 10 auf, wobei zumindest der mit den Öffnungen 10 versehene Bereich des Türinnenblechs 5 durch eine großflächige elastische Abdichtfolie 11 abgedeckt ist.

Die aus einem geeigneten Kunststoff, wie Polyethylen oder dgl. gefertigte dünnwandige Abdichtfolie 11 ist randseitig unter Zwischenschaltung einer umlaufenden Kleberaupe an der dem Fahrgastraum 8 zugewandten Seite des Türinnenblechs 5 befestigt.

Aus der Abdichtfolie 11 ist zumindest eine einstückig mit dieser ausgebildete Aufnahme 12 vorgesehen, die von einer Fertigungslage A in eine Einbaulage B verlagerbar ist.

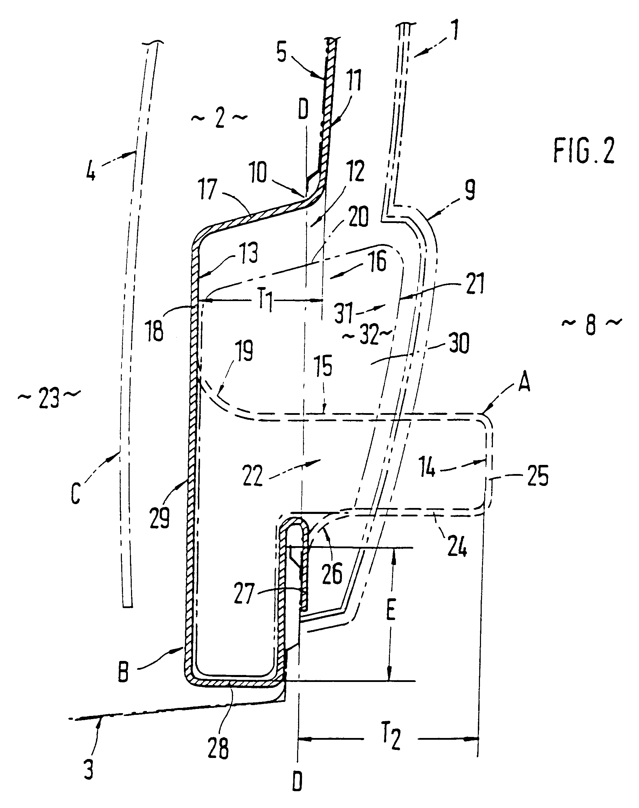

In der Fertigungslage A setzt sich die Aufnahme 12 aus zwei übereinanderliegend angeordneten, im Querschnitt gesehen, etwa U-förmig profilierten Ausformungen 13, 14 zusammen, die sich in entgegengesetzten Richtungen erstrecken. Die beiden Ausformungen 13, 14 sind über einen gemeinsamen Wandabschnitt 15 aneinander angeschlossen, der gemäß Fig. 2 etwa horizontal ausgerichtet ist. Die Ausformungen 13, 14 werden durch Heißverprägen der Abdichtfolie 11 in einem Formwerkzeug erstellt.

Die obenliegende Ausformung 13 ragt durch die Öffnung 10 des Türinnenblechs 5 in den Hohlraum 2 des Türkörpers 3 herein, wobei die offene Seite 16 der Ausformung 13 dem Fahrgastraum 8 zugekehrt ist. Die vom Fahrgastraum 8 aus gesehen etwa trogförmige Ausformung 13 setzt sich aus einer oberen schräg verlaufenden Wand 17, einer vertikalen Wand 18 und einem Teilbereich des gemeinsamen Wandabschnittes 15 zusammen. Vorne und hinten ist die Ausformung 13 durch nicht näher dargestellte, querverlaufende vertikale Wandabschnitte geschlossen.

Die sich in Längsrichtung erstreckende Wand 18 verläuft mit Abstand T₁ zur Kontur der Abdichtfolie 11, wobei durch das Maß T₁ die Lage einer dem Hohlraum 2 des Türkörpers 3 zugewandten vertikalen Wand 29 der Aufnahme 12 in der Einbaulage B definiert ist.

Der etwa horizontale Wandabschnitt 15 ist über einen gerundeten Übergangsbereich 19 an die vertikale Wand 18 angeschlossen. Die schräg verlaufende Wand 17 verläuft etwa parallel und mit Abstand zu einer oberen Begrenzung 20 eines in die Aufnahme 12 eingesetzten Audio- oder Ausstattungsteiles 21.

Die untenliegende Ausformung 14 schließt sich an den gemeinsamen Wandabschnitt 15 an und erstreckt sich in Richtung Fahrgastraum 8, wobei die offene Seite 22 der Ausformung 14 der Fahrzeugaußenseite 23 zugewandt ist.

In der Fertigungslage A würde die Ausformung 14 theoretisch die Verkleidung 9 in Richtung Fahrgastraum 8 hin überragen.

Die vom Fahrgastraum 8 aus gesehene, ebenfalls trogförmige Ausformung 14 setzt sich aus dem oberen Wandabschnitt 15, einem unteren Wandabschnitt 24 und einer etwa vertikalen Verbindungswand 25 zusammen. Vorne und hinten ist die trogförmige Ausformung 14 durch nicht näher dargestellte vertikale Querwände geschlossen.
Der untere Wandabschnitt 24 ist mittels eines radienförmigen Übergangsbereiches 26 an einen endseitigen Befestigungsbereich 27 der Abdichtfolie 11 angschlossen.

Durch eine nach außen und unten gerichtete Krafteinwirkung auf die untenliegende Ausformung 14 ist die Aufnahme 12 in ihre Einbaulage B verlagerbar.

Durch die nach außen gerichtete Krafteinwirkung erfolgt ein Umstülpen der untenliegenden Ausformung 14. Die nachfolgende, nach unten gerichtete Krafteinwirkung auf die umgestülpte Ausformung 14 hat zur Folge, daß sich die Aufnahme 12 über die Öffnung 10 des Türinnenblechs 5 hinweg nach unten erstreckt und abschnittsweise an der dem Hohlraum 2 zugekehrten Seite des Türinnenblechs 5 anliegt. Die Aufnahme 12 verläuft in der Einbaulage B komplett innerhalb des Hohlraums 2 des Türkörpers 3, wobei sie die Öffnung 10 nach unten hin um das Maß E übergreift.

Die beiden Ausformungen 13, 14 sind in der Fertigungslage B annähernd rechtwinkelig zu einer vertikalen Hilfsebene D-D ausgerichtet und so gestaltet, daß ein einfaches Ausfahren aus dem Formwerkzeug möglich ist.

Die Tiefe T₂der untenliegenden Ausformung 14 definiert, um welches Maß E die Aufnahme 12 die Öffnung 10 des Türinnenblechs 5 nach unten hin überragt.

Beim Verlagern der Aufnahme 12 von ihrer Fertigungslage A in die Einbaulage B wird der untere, etwa waagrechte Wandabschnitt 24 der unteren Ausformung 14 dergestalt bewegt, daß er mit seiner Innenseite an der dem Hohlraum 2 zugekehrten Seite des Türinnenblechs 5 unterhalb der Öffnung 10 abschnittsweise anliegt. Eine Verbindungswand 25 der untenliegenden Ausformung 14 bildet in der Einbaulage B in umgedrehter Konfiguration eine Bodenwand 28 der Aufnahme 12 und der in Fertigungslage A waagrechte Wandabschnitt 15 stellt in der Einbaulage B eine vertikale Wand 29 zwischen der Wand 18 und der Bodenwand 28 dar, wobei die Wände 18 und 29 in einer gemeinsamen, etwa vertikalen Ebene verlaufen.

Das Audio- oder Ausstattungsteil 21 wird im Ausführungsbeispiel durch eine Klangbox 30 gebildet, die sich aus einem äußeren Gehäuse und einem innenliegenden Lautsprecher zusammensetzt. Die Klangbox 30 ist durch die Öffnung 10 in die Aufnahme 12 eingesetzt. Im unteren Bereich ist die Klangbox 30 geringfügig schmäler als die zugeordnete Aufnahme 12.

Im Bereich der Öffnung 10 weist die Klangbox 30 eine größere Tiefe auf und ragt mit einem vorspringenden Abschnitt 31 in den zwischen Türinnenblech 5 und Verkleidung 9 gebildeten Raum 32 hinein.

Die Klangbox 30 ist am Türinnenblech 5 oder an der Verkleidung 9 mittels nicht näher dargestellter Befestigungselemente in Lage gehalten.

Das Audio- oder Ausstattungsteil 21 kann jedoch auch durch einen Lautsprecher, einen Aschenbecher, ein Aufnahmebehältnis oder dgl. gebildet werden.

Die an der Abdichtfolie 11 ausgebildete Aufnahme 12 umschließt das eingesetzte Audio- oder Ausstattungsteil 21 in der Einbaulage B zumindest abschnittsweise und schottet es gegenüber dem Türhohlraum 2 luft- und wasserdicht ab.

Die Längserstreckung der Aufnahme 12 richtet sich nach der Größe des einzubauenden Audio- oder Ausstattungsteiles 21.

Die Aufnahme 12 weist unterhalb der Öffnung 10 eine geringere Tiefe auf als im Bereich der Öffnung 10, da im Bereich der Öffnung 10 auch der zwischen Türinnenblech 5 und Verkleidung 9 erstreckende Bauraum als Aufnahme nutzbar ist.

## Patentansprüche

1. Elastische Abdichtfolie (11) für ein Türinnenblech (5) einer Kraftfahrzeugtür (1) mit einer einstückig mit der Abdichtfolie ausgebildeten, von einer Fertigungslage in eine Einbaulage überführbaren Aufnahme (12), die in ihrer Einbaulage durch eine Öffnung (10) des Türinnenblechs (5) in den Hohlraum des Türkörpers (3) hineinragt und ein in die Aufnahme (12) eingesetztes Audio- oder Ausstattungsteil zumindest abschnittsweise umhüllt und gegenüber dem inneren Hohlraum des Türkörpers (3) wasserdicht abschottet, **dadurch gekennzeichnet,** daß die Aufnahme (12) in der Fertigungslage (A) aus zwei übereinanderliegend angeordneten, im Querschnitt etwa U-förmig profilierten, sich in entgegengesetzten Richtungen erstreckenden Ausformungen (13, 14) der Abdichtfolie (11) zusammengesetzt ist, wobei die Ausformungen (13, 14) über einen gemeinsamen Wandabschnitt (15) aneinander angeschlossen sind und daß durch eine nach außen und unten gerichtete Krafteinwirkung auf die untenliegende Ausformung (14) die Aufnahme (12) in ihre Einbaulage (B) verlagerbar ist, wobei sich die Aufnahme (12) in der Einbaulage (B) über die Öffnung (10) des Türinnenblechs (5) hinweg nach unten erstreckt und abschnittsweise an der dem Hohlraum (2) zugekehrten Seite des Türinnenbleches (5) anliegt.

2. Elastische Abdichtfolie nach Anspruch 1, **dadurch gekennzeichnet,** daß die obenliegende Ausformung (13) in der Fertigungslage (A) abschnittsweise in den Hohlraum (2) des Türkörpers (3) hineinragt und mit ihrer offenen Seite (16) dem Fahrgastraum (8) zugekehrt ist.

3. Elastische Abdichfolie nach den Ansprüchen 1 und 2, **dadurch gekennzeichnet,** daß durch die Tiefe T₁ der obenliegenden Ausformung (13) die Lage einer dem Hohlraum (2) des Türkörpers (3) zugewandten vertikalen Wand (29) der Aufnahme (12) in Einbaulage (B) definiert ist.

4. Elastische Abdichtfolie nach Anspruch 1, **dadurch gekennzeichnet,** daß sich die untenliegende Ausformung (13) in der Fertigungslage (A) in Richtung Fahrgastraum (8) erstreckt und ihre offene Seite (22) der Fahrzeugaußenseite (23) zugewandt ist.

5. Elastische Abdichtfolie nach den Ansprüchen 1 bis 4**, dadurch gekennzeichnet,** daß die beiden Ausformungen (13, 14) in der Fertigungslage (A) annähernd rechtwinkelig zu einer vertikalen Hilfsebene D-D ausgerichtet sind.

6. Elastische Abdichtfolie nach Anspruch 4, **dadurch gekennzeichnet,** daß durch die Tiefe T₂ der untenliegenden Ausformung (13) das Maß E festgelegt wird, um welches die Aufnahme (12) die Öffnung (13) des Türinnenbleches (5) nach unten hin überragt.

7. Elastische Abdichtfolie nach den Ansprüchen 1, 4 und 5, **dadurch gekennzeichnet,** daß ein unterer, etwa waagrecht verlaufender Wandabschnitt (24) der unteren Ausformung (14) in der Einbaulage (B) der Aufnahme (12) an der dem Hohlraum (2) zugekehrten Seite unterhalb der Öffnung (10) abschnittsweise am Türinnenblech (5) anliegt, daß eine Verbindungswand (25) der untenliegenden zweiten Ausformung (14) in der Einbaulage (B) eine Bodenwand (28) der Aufnahme (12) bildet und daß der in Fertigungslage (A) etwa waagrechte Wandabschnitt (15) in Einbaulage (B) eine vertikale Wand (29) zwischen der Längswand (18) und der horizontalen Bodenwand (28) bildet.

8. Elastische Abdichtfolie nach Anspruch 1, **dadurch gekennzeichnet,** daß das Audio- oder Ausstattungsteil (21) durch einen Einbaulautsprecher gebildet wird.

9. Elastische Abdichtfolie nach Anspruch 1, **dadurch gekennzeichnet,** daß das Audio- oder Ausstattungsteil (21) durch eine Klangbox (30) gebildet wird, die am Türinnenblech (5) oder an der Verkleidung (9) befestigbar ist.

## Claims

1. A resilient sealing film (11) for an inner panel (5) for a motor-vehicle door (1) with a receiving means (12) which is formed integrally with the sealing film and can be transferred from a production position into an insertion position and which in its insertion position projects through an opening (10) in the inner door panel (5) into the cavity of the door body (3) and encloses at least in part an audio component or piece of equipment inserted into the receiving means (12) and partitions it off in a water-tight manner from the inner cavity of the door body (3), **characterized in that** in the production position (**A**) the receiving means (12) is formed by two extended portions (13, 14) of the sealing film (11) arranged one above the other and profiled substantially in a U-shape in cross-section and extending in opposite directions, wherein the extended portions (13, 14) are attached to one another by way of a common wall portion (15), and the receiving means (12) can be moved into its insertion position (**B**) by the application of force directed outwards and downwards onto the lower extended portion (14), wherein the receiving means (12) extends in the insertion position (**B**) downwards beyond the opening (10) in the inner door panel (5) and rests in part against the side of the inner door panel (5) facing the cavity (2).

2. A resilient sealing film according to Claim 1, **characterized in that** in the production position (**A**) the upper extending portion (13) projects in part into the cavity (2) of the door body (3) and faces the passenger compartment (8) with its open side (16).

3. A resilient sealing film according to Claims 1 and 2, **characterized in that** the position of a vertical wall (29) of the receiving means (12) facing the cavity (2) of the door body (3) in the insertion position (**B**) is defined by the depth **T**_{**1**} of the upper extending portion (13).

4. A resilient sealing film according to Claim 1, **characterized in tha**t in the production position (**A**) the lower extended portion (14) extends in the direction of the passenger compartment (8) and its open side (22) faces the outside (23) of the vehicle.

5. A resilient sealing film according to Claims 1 to 4, **characterized in that** in the production position (**A**) the two extended portions (13, 14) are orientated substantially at right angles to a vertical auxiliary plane **D-D**.

6. A resilient sealing film according to Claim 4, **characterized in that** the dimension **E**, by which the receiving means (12) projects downwards beyond the opening (10) in the inner door panel (5) is set by the depth **T**_{**2**} of the lower extended portion (14).

7. A resilient sealing film according to Claims 1, 4 and 5, **characterized in that** in the insertion position (**B**) of the receiving means (12) a lower wall portion (24) of the lower extended portion (14) extending substantially horizontally rests in part against the inner door panel (5) on the side facing the cavity (2) below the opening (10), a connecting wall (25) of the lower second extended portion (14) forms a base wall (28) of the receiving means (12) in the insertion position (**B**), and the wall portion (15), which is substantially horizontal in the production position (**A**), forms a vertical wall (29) between the longitudinal wall (18) and the horizontal base wall (28) in the insertion position (**B**).

8. A resilient sealing film according to Claim 1, **characterized in that** the audio component or piece of equipment (21) is formed by an inserted loudspeaker.

9. A resilient sealing film according to Claim 1, **characterized in that** the audio component or piece of equipment (21) is formed by a tone box (30) which can be secured to the inner door panel (5) or to the lining (9).

## Revendications

1. Feuille d'étanchéité (11) élastique pour une tôle intérieure de porte (5) d'une portière (1) d'un véhicule automobile avec un logement (12) formé d'une seule pièce avec la feuille d'étanchéité, transférable d'une position de fabrication dans une position de montage, qui dans sa position de montage, pénètre à travers une ouverture (10) de la tôle intérieure de porte (5), dans la cavité du corps de porte (3) et enveloppe au moins par endroits un élément audio ou un élément d'équipement inséré dans le logement (12) et le rend étanche à l'eau par rapport à la cavité intérieure du corps de porte (3), caractérisée en ce que le logement (12) dans la position de fabrication (A) est constitué de deux formations (13, 14) de la feuille d'étanchéité (11), superposées, profilées à peu près en U dans leur section transversale, s'étendant dans des sens opposés, les formations (13, 14) se rattachant l'une à l'autre par une portion de paroi (15) commune et en ce que par l'effet d'une force dirigée vers l'extérieur et vers le bas sur la formation (14) inférieure, le logement (12) est déplaçable dans sa position de montage (B) le logement (12) dans la position de montage (B) s'étendant vers le bas au-delà de l'ouverture (10) de la tôle intérieure de porte (5) et s'appliquant par endroits contre le côté, tourné vers la cavité (2), de la tôle intérieure de porte (5).

2. Feuille d'étanchéité élastique selon la revendication 1, caractérisée en ce que la formation (13) supérieure dans la position de fabrication (A) s'engage par endroits dans la cavité (2) du corps de porte (3) et est tournée, avec son côté (16) ouvert, vers l'habitacle (8).

3. Feuille d'étanchéité élastique selon les revendications 1 et 2 caractérisée en ce que par la profondeur T₁ de la formation (13) supérieure, la position d'une paroi (29) verticale, tournée vers la cavité (2) du corps de porte (3), du logement (12), est définie dans la position de montage (B).

4. Feuille d'étanchéité élastique selon la revendication 1, caractérisée en ce que la formation (13) inférieure s'étend dans la position de fabrication (A), en direction de l'habitacle (8) et son côté ouvert (22) est tourné vers le côté extérieur (23) du véhicule.

5. Feuille d'étanchéité élastique selon les revendications 1 à 4, caractérisée en ce que les deux formations (13, 14) dans la position de fabrication (A) sont orientées à peu près à angle droit par rapport à un plan auxiliaire D-D vertical.

6. Feuille d'étanchéité élastique selon la revendication 4, caractérisée en ce que par la profondeur T₂ de la formation (13) inférieure est définie la cote E de laquelle le logement (12) dépasse vers le bas de l'ouverture (13) de la tôle intérieure de porte (5).

7. Feuille d'étanchéité élastique selon les revendications 1, 4 et 5 caractérisée en ce qu'une portion de paroi (24) inférieure, s'étendant à peu près horizontalement, de la formation (14) inférieure, dans la position de montage B du logement (12), s'applique par endroits contre la tôle intérieure de porte (5), sur le côté tourné vers la cavité (2), au-dessous de l'ouverture (10), en ce qu'une paroi de liaison (25) de la deuxième formation (14) inférieure forme, dans la position de montage (B), une paroi de fond (28) du logement (12) et en ce que la portion de paroi (15), à peu près horizontale dans la position de fabrication (A), forme, dans la position de montage (B), une paroi verticale (29), entre la paroi longitudinale (18) et la paroi de fond (28) horizontale.

8. Feuille d'étanchéité élastique selon la revendication 1, caractérisée en ce que l'élément audio ou l'élément d'équipement (21) est formé par un hautparleur intégré.

9. Feuille d'étanchéité élastique selon la revendication 1, caractérisée en ce que l'élément audio ou l'élément d'équipement (21) est formé par une enceinte acoustique (30), qui peut être fixée sur la tôle intérieure de porte (5) ou sur le revêtement (9).
